# EUROPEAN PATENT APPLICATION

(11) **EP 4 746 002 A1**
(43) Date of publication of application: **20.05.2026**
(21) Application number: 25211063.0
(22) Date of filing: 24.10.2025
(51) Int. Cl.: H01B 7/42, F28D 15/04, H02G 3/03

(54) **POWER CABLE SYSTEM, METHOD FOR COOLING A POWER CABLE AND USE OF A TWO-PHASE HEAT TRANSFER MECHANISM**

(30) Priority: 18.11.2024 NO 20241136
(71) Applicant: Nexans, 92400 Courbevoie (FR)
(72) Inventor: Schawlann, Sigurd, 1555 Son (NO)
(74) Representative: Acapo Onsagers AS

(57) **Abstract**

A power cable system, comprising a power cable, and a cooling device thermally coupled to the power cable, wherein the cooling device comprises an enclosure, wherein a first region of the enclosure is configured to absorb heat from one part of the power cable, wherein a second region of the enclosure is configured to release heat to another part of the power cable, another object or the environment, and wherein the cooling device has a two-phase heat transfer mechanism inside the enclosure for conducting a heat transfer between the first region and the second region.

## Description

### Field of the invention

The present invention relates to a power cable system, a method for cooling a power cable system and the use of a two-phase heat transfer mechanism in a cooling device.

### Background

Power cables, particularly subsea and land-based, are essential for transmitting electrical power over long distances. Subsea cables, used for offshore wind farms and inter-country connections, and land-based cables, used in energy distribution, must handle high voltages and currents, leading to significant thermal stress and potential overheating in certain spots, which may be referred to as hotspots.

Hotspots in subsea cables may occur at bend stiffeners, cable joints, and burial transitions. Bend stiffeners, used to prevent excessive bending at termination points, may experience increased heat generation. Bend stiffeners or any other cable protection devices may have a low thermal conductivity, which makes these devices prone to higher temperatures. Burial transition points, where cables shift from buried to exposed states, experience changes in thermal conductivity and mechanical stress, which may contribute to hotspot formation. Hotspots may be particularly problematic in subsea cables, as underwater repairs are difficult and costly.

Land-based power cables, though more accessible, may also face similar conditions. Hotspots may commonly develop at terminations and connection points due to increased electrical resistance. Heavily loaded sections of landlines carrying higher currents may experience significant heating, leading to localized thermal stresses.

The formation of hotspots may result in an accelerated aging of cable materials, a reduced power transmission capacity, and an increased risk of sudden failure. To mitigate hotspots, improved cable designs, such as enhanced joints and bend stiffeners, and cooling may be essential. Proactive maintenance, based on real-time monitoring data, and improved installation practices may further reduce the occurrence of hotspots, ensuring the reliable operation of both subsea and land-based power cables.

Thus, there may be a need for an improved power cable system that reduces or avoids the formation of hot spots.

### Summary of the invention

The present invention is defined by the appended claims and in the following:
It is proposed a power cable system, comprising a power cable, and a cooling device thermally coupled to the power cable, wherein the cooling device comprises an enclosure, wherein a first region of the enclosure is configured to absorb heat from one part of the power cable, wherein a second region of the enclosure is configured to release heat to another part of the power cable, another object or the environment, and wherein the cooling device has a two-phase heat transfer mechanism inside the enclosure for conducting a heat transfer between the first region and the second region.

The power cable system may be suitable for subsea and land applications and may be understood as an electrical infrastructure designed to transmit high-voltage electricity across both underwater and terrestrial environments. According to the invention, the power cable system comprises a power cable and a cooling device.

The power cable may comprise a copper conductor, or a conductor of another metal, insulated with materials such as XLPE (Cross-linked polyethylene) or EPR (Ethylene Propylene Rubber), and is protected by a water barrier, such as a metallic water barrier, steel wire armoring, and an outer jacket. Subsea cables are usually designed to withstand the pressures exerted by the marine environment, resist moisture, and protect against external damage. In contrast, land cables may prioritize mechanical protection for underground or overhead installations. These cables can transmit both alternating current (AC) and direct current (DC) power, handling voltages from 12 kV to over 800 kV. They are instrumental in connecting offshore energy sources to onshore grids.

The cooling device is configured to dispose of heat from the power cable. It may preferably be a passive device that is capable of cooling the power cable through transporting heat from at least one location of the power cable to another location of the power cable or to the exterior. In other words, heat may be transmitted by the cooling device into the environment, another object, or into a cooler location of the cable. The temperature of the cable needs to be limited to a predetermined value at any location of the cable in order to allow the transfer of the desired electrical power. Thus, a hot spot of the cable may be cooled by transmitting a fraction of the heat from the hot spot to another location of the cable, where a lower temperature is expected. According to the invention, the cooling device has a two-phase heat transfer mechanism. Other objects or the environment could be used as a heat sink. The environment may include ambient air or water if the power cable system is used in a subsea installation.

A two-phase heat transfer mechanism may be understood as a thermal process, which involves a heat transfer across two distinct phases of a heat transfer medium, typically liquid and vapor, through phase change processes. In general, this kind of heat transfer mechanism operates through evaporation and condensation. At the first region, which may be referred to as a hot region, the heat transfer medium in liquid form absorbs thermal energy, initiating an evaporative phase transition to vapor, which then migrates towards the second region, which may be referred to as a cool region. At the cool region, condensation occurs as the vapor releases heat, transitioning back into the liquid phase. This cyclical phase change enables significant heat transfer with minimal thermal gradient, making it highly effective for maintaining near-isothermal conditions. The two-phase heat transfer mechanism may be achieved with heat pipes and thermosiphons, which exploit phase change efficiency for passive heat transfer. The heat transfer medium is enclosed in the enclosure, which may preferably be hermetically sealed.

The heat transfer medium may include water, which is the most commonly used heat transfer medium for heat pipes in electronic cooling applications. It operates from room temperature up to about 200°C. As an alternative, Methanol and Ethanol may be used. Ethanol, for example, operates from approximately -10°C to over 100°C. Other heat transfer mediums may be used. The filling ratio, i.e. the amount of heat transfer medium, may be around 50-70% of the total internal volume of the cooling device. The enclosure of the cooling device may contain a vacuum inside, which facilitates the vaporization and condensation process of the heat transfer medium, as this removes air and other gases that could interfere with the heat transfer process and helps to maintain the purity of the heat transfer medium. An overfilling may significantly reduce the cooling performance.

The terms "a cooling device" or "the cooling device" do not rule out that a plurality of cooling devices is employed in the power cable system.

The cooling device may be integrated into the power cable and/or it may be external to it. Generally, the cooling device is thermally coupled to the power cable, such that the cooling device is able to receive heat from the power cable. The thermal coupling may be achieved by establishing a conductive pathway or utilizing an existing, sufficient conductive pathway that allows heat transfer from the power cable to the cooling device. The cooling device may be integrated into the power cable and/or it may be attached to an exterior of the power cable and/or it may be arranged in or at a heat sink that is coupled with the power cable. Some embodiments are explained further below.

By using a two-phase cooling device, the cooling power and resultantly, the operating state of the power cable can be optimized.

The enclosure may be a closed, elongated and/or substantially straight tubular enclosure. Hence, it may closely follow the course of the power cable. In an exemplary embodiment, where the cooling device is placed in the ground, the first region may be arranged near the power cable, while the second region sticks out of the ground, as discussed in the following.

At least a part of the cooling device may be integrated into the power cable. Consequently, the cooling device may absorb heat at one location, i.e., the first region of the enclosure, and transport it to another location, i.e., the second region. The cooling device may be integrated into the power cable completely. This means that the cooling device extends inside the power cable and does not extend protrude through a peripheral surface of the power cable to a location outside the power cable cross section. This may be preferred in high voltage power cables, as the setup of the electric isolation can be optimized. In another embodiment, the cooling device may only partially be integrated into the power cable and may extend through a peripheral surface of the power cable.

The cooling device may be integrated into a filler element of the power cable. Particularly in multi-conductor power cables, a filler element may be provided to fill spaces between conductor strands and other cable components, eliminating voids that may lead to partial discharges or electrical stress concentrations. By filling gaps and providing uniform contact, filler elements may help distribute electrical stress evenly, reducing the risk of localized stress concentrations that could lead to insulation breakdown. Thus, a part of a cross section of a filler element may be replaced by a cooling device that extends along an axial direction of the power cable.

The cooling device may be integrated into a bend stiffener, which may be attached to or may be a part of the power cable. The bend stiffener may be understood as a component that is designed to protect subsea power cables from overbending, particularly at connection points such as turbine foundations or substations. The bend stiffener provides a gradual transition in stiffness from the flexible cable to the rigid connection point, prevents excessive bending and fatigue damage to the cable and reduces the overall curvature of the cable under dynamic loads. The bend stiffener may be made of an elastomeric material, such as polyurethane, and may comprise a conical shape for achieving a gradual increase in stiffness along the length of the bend stiffener. Due to the bending of the power cable in the bend stiffener and the transition from a submersed position into a location above the water, heat may need to be disposed of in the bend stiffener. By integrating the cooling device into the bend stiffener, an efficient heat transfer from a region inside the bend stiffener into a region outside the bend stiffener may be accomplished.

The cooling device may have a spiral shape. Instead of providing an elongated, axial shape, the cooling device may spirally wound around an extension axis. For example, it may be spirally wound inside the bend stiffener or inside a filler element or around the power cable.

The cooling device may be integrated into a conductor of the power cable. A part of the conductor may thus be provided in the form of a cooling device. The outer diameter of the conductor at a location where the cooling device is integrated into the conductor, may be the same as axially adjacent regions, where the conductor does not comprise a cooling device. A major part of the electrical power transfer runs through radial outer regions of the cross section, such that the replacement of an inner part of the conductor by a cooling device along a limited length of the conductor does substantially not affect the ability of transferring electrical power in the desired amount.

The cooling device may be configured to be inserted into the ground adjacent to the power cable to cool the power cable when it is laid in the ground. The power cable may thus at least partially be a landline buried in the ground. Instead of directly attaching the cooling device on the power cable, it may be thermally connected to the power cable by inserting it into the ground in order to dispose of heat that is transferred into the ground. Thus, the ground acts as a heat sink for the power cable and the heat sink is equipped with the cooling device. It may be important to choose the distance between the power cable and the cooling device to be small enough to efficiently dispose of heat from the ground. The actual distance may be chosen under consideration of the properties of the ground, the properties of the power cable and the heat to be dissipated.

The power cable system may comprise heat exchange fins, baffles, or other heat transferring structural elements arranged on the second region. These heat transferring structural elements may act as a heat exchanger that is flown-through by air. The heat transferring structural elements may be thermally bonded to the second region of the cooling device. As an interface to the cooling device, the heat transferring structural elements may comprise a metal base, made from aluminium or copper. The base may be thermally bonded to the cooling device, either directly or through a thermally conductive adhesive or thermal interface material for a superior thermal conduction. The heat transferring structural elements may comprise an array of fins or channels configured to dispose of heat from the heat exchanger to an airflow that flows along the fins or channels. The fins or channels increase the active surface area to enhance the convective transfer of heat. The fins or other heat transferring structural elements may be made from the same thermally conductive material as the base, thereby ensuring efficient heat conduction from the cooling device through the base and into the fins. The design of the fins may be optimized by balancing factors such as fin thickness, height, and spacing to promote efficient heat dissipation while minimizing airflow resistance. Additionally, the geometry of the heat transferring structural elements, including the arrangement of the fins and the shape of the airflow passages, may be selected based on Reynolds and Nusselt number considerations to ensure an effective thermal boundary layer and high heat transfer coefficients.

The power cable system may comprise an auxiliary heat exchanger arranged in, at or near the second region, wherein the auxiliary heat exchanger is configured to remove heat from the cooling device. The heat exchanger may be designed to dispose of heat by using another coolant, e.g., a liquid coolant. As such, it may be configured to be flown-through by the coolant through coolant channels. By providing an auxiliary heat exchanger between the first and the second region, additional heat may be disposed of from the cooling device.

The auxiliary heat exchanger may be coupled with a refrigeration apparatus. The refrigeration apparatus may be configured to conduct an active refrigeration cycle. The refrigeration cycle may comprise four primary stages: evaporation, compression, condensation, and expansion. In the evaporator, a refrigerant absorbs thermal energy from the auxiliary heat exchanger, where heat flows from the power cable system through the heat exchanger to the refrigerant, which has a lower temperature. This causes the refrigerant to evaporate. This phase change from liquid to gas removes significant thermal energy due to the refrigerant's latent heat of vaporization. The gaseous refrigerant may then be directed to a compressor, where it undergoes adiabatic compression, raising its pressure and temperature. The highpressure, high-temperature gas flows into the condenser, where it releases heat to the surroundings as it condenses back into a liquid, facilitated by, for example, a secondary heat exchanger and optionally forced convection from a fan to enhance thermal dissipation. After condensation, the refrigerant may pass through an expansion valve, where a rapid pressure drop causes cooling via the Joule-Thomson effect, resulting in a low-temperature, low-pressure refrigerant that re-enters the evaporator to repeat the cycle. The general design of the refrigeration cycle may be thermodynamically optimized based on parameters like the refrigerant type, system pressures, and thermal load to achieve efficient heat extraction from the apparatus while maintaining stable operating conditions.

The cooling device may comprise a heat pipe or a thermosiphon. Heat pipes commonly employ a capillary-driven wick structure to return condensed liquid to the hot region. Thermosiphons often use gravity to return liquid without the need for additional components. Both heat pipes and thermosiphons support high thermal loads with minimal temperature differential across the device to achieve a high-performance cooling.

The invention also relates to the use of a two-phase heat transfer mechanism in a cooling device in thermal contact with a power cable of a power cable system to cool the power cable.

The invention also relates to a method for cooling a power cable, the method comprising absorbing heat from one part of the power cable through a first region of a cooling device being thermally coupled to the power cable, wherein the cooling device comprises an enclosure in which a two-phase heat transfer mechanism is included, and conducting the heat to another part of the power cable, another object, or the environment through a second region of the cooling device.

As indicated above, the environment may include the environment above sea, or under the sea, such that ambient air or water may serve as a heat sink. The term "another object" may include any other component that is thermally coupled with the cooling device and may in turn transfer heat into the environment, either directly or indirectly.

In analogy to the above, the cooling device may be a heat pipe or a thermosiphon.

### Short description of the drawings

In the following description this invention will be further explained by way of exemplary embodiments shown in the drawings:
Fig. 1 shows a power cable system in a sectional view.
Fig. 2 shows a bend stiffener in a spatial view with cooling devices of the power cable system integrated.
Fig. 3 shows a power cable system with a buried power cable and cooling devices in the ground.
Fig. 4 shows a buried tube with a power cable and cooling devices inside.
Fig. 5 shows a cooling device in form of a thermosiphon with an auxiliary heat exchanger and fins.
Fig. 6 shows a power cable system installed in a floating structure.

### Detailed description of the invention

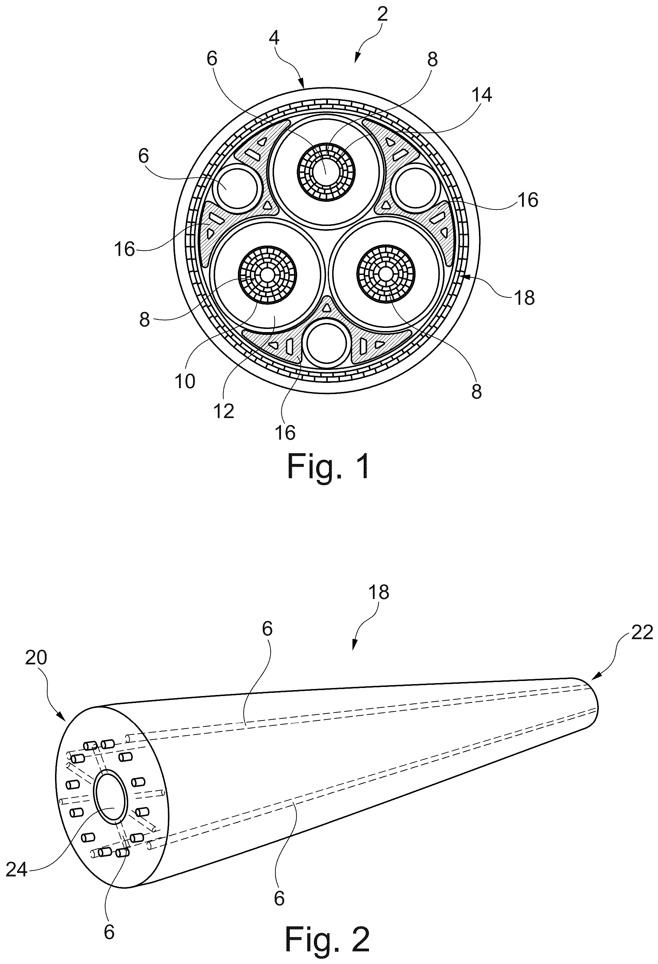

Fig. 1 shows a power cable system 2 in a schematic sectional view. It comprises a power cable 4 and a plurality of cooling devices 6. Merely as an example, the power cable system 2 comprises three conductors 8 and the cooling devices 6 are integrated into several different locations within the cross section of the power cable 4. The skilled person will be able to decide which of the locations meets the requirements of the power cable system 2 to be provided. This may be one of them, or a plurality of them.

As indicated above, the power cable 4 comprises three conductors 8, which may be made from copper. Each of the conductors 8 may be surrounded by a conductor screen 10 and an insulating layer 12. Further layers may be provided, and the illustration does not limit the power cable system 2. A detailed explanation is thus not provided, and the description of Fig. 1 focuses on the integration of the cooling devices 6.

As a first example, one of the cooling devices 6 is integrated into a conductor 8. The respective cooling device 6 may be provided in the form of a heat pipe with a straight extension. The cooling device 6 replaces a part of the cross section of the conductor 8. For example, the cooling device 6 may comprise a sealed enclosure 14 made from a metallic or plastic material that extends inside the conductor 8 and is radially and axially surrounded by remaining parts of the conductor 8. Inside the enclosure 14, a wick structure for supporting a transport of a heat transfer medium through capillary effect is provided. The cooling device 6 is arranged in a part of the power cable 4 along its length in a way that a first region of the enclosure 14, i.e. a first end, is located in a location prone to a hot spot formation, while a second region of the enclosure 14, i.e. a second end, is provided in a location where a sufficient heat disposal can be guaranteed.

The power cable 4 exemplarily comprises filler elements 16, which fill a space between the three conductors 8 and an outer arrangement 18 which may comprise insulation layers, metallic sheath or screen layers, armoring layers and/or a jacket. In this exemplary embodiment, each of the filler elements 16 comprises a cooling device 6 that extends parallel to the conductors 8. Its location along the length of the power cable 4 may be selected in accordance with the previously-mentioned example. The respective cooling device 6 may provide additional bending stiffness in the power cable 4. The cooling device 6 that are integrated into the conductors 8 may have the same or a different diameter than those arranged in the filler elements 16. The illustration in Fig. 1 merely shows an example.

It is conceivable that more than just one of the conductors 8 and/or more than just one of the filler elements 16 may be equipped with a cooling device 6.

Fig. 2 shows a bend stiffener 18 in an exemplary embodiment. The bend stiffener 18 comprises a first end 20 and a second end 22. The bend stiffener 18 is formed as a cone and its diameter decreases from the first end 20 to the second end 22. The first end 20 is exemplarily configured to be fastened on a structure, such as a platform, a substation or the like. The bend stiffener 18 has a central opening 24 that extends through the entire length of the bend stiffener 18. The power cable 4 may be arranged inside the central opening 24 and the bend stiffener 18 controls the bending behavior of the power cable 4, e.g. at termination points.

One or a plurality of cooling devices 6 may be integrated into the bend stiffener 18, as indicated by dashed lines in Fig. 2. They may extend parallel to the longitudinal axis of the bend stiffener 18. Some of them, as an example, are shown to extend in a radial direction within the cross section of the bend stiffener 18. The material and design of the enclosure 14 needs to be chosen in a way that the cooling device 6 is able to withstand all mechanical and thermal influences during the expected life time of the power cable 4. The material may be any metallic material, or any other non-metallic material that is suitable.

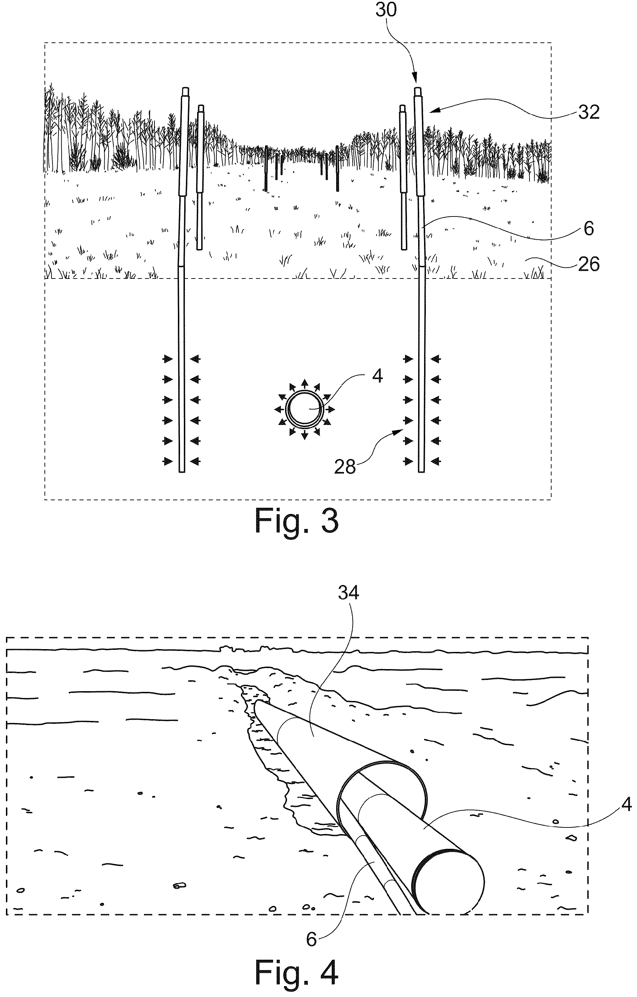

Fig. 3 shows an exemplary embodiment of a power cable 4 laid in the ground 26. The power cable 4 emits heat into the ground 26, such that the ground 26 acts as a heat sink for the power cable 4. To support the heat transfer into the ground 26, a plurality of cooling devices 6 is inserted into the ground 26. These may be provided in the form of thermosiphons having a first region 28 in the ground 26 and a second region 30 protruding into the environment. Exemplarily, the second region 30 has fins 32 extending from the second region 30, which fins 32 increase the surface area of the second region 30 to improve the heat disposal. Ambient air may flow through and along the fins 32 and absorbs heat from the cooling devices 6.

Fig. 4 shows a pipe 34 buried in the ground 26. Inside the pipe 34, a power cable 4 is arranged, along which a cooling device 6 is placed.

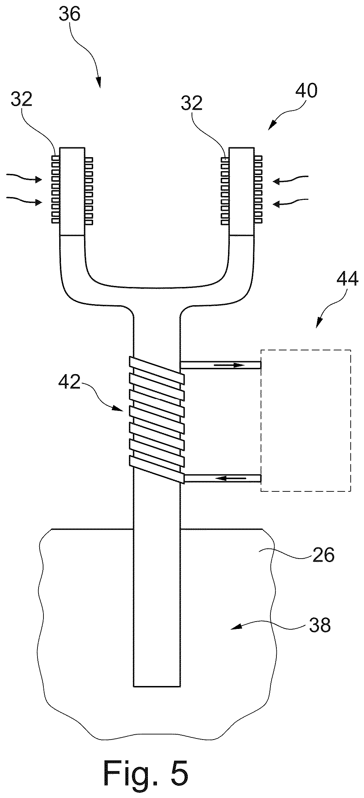

Fig. 5 shows a cooling device 36 in form of a hybrid thermosiphon. A first region 38 of the cooling device 36 is in the ground 26, while a second region 40 extends into the environment above the ground 26. The second region 40 comprises an arrangement of fins 32. As an example, the second region 40 has a Y-shape.

In addition to the fins 32, an auxiliary heat exchanger 42 is provided near the second region 40 and serves for an additional disposal of heat. In this exemplary embodiment, the auxiliary heat exchanger 42 is coupled with a refrigeration apparatus 44 that is configured to conduct a refrigeration cycle to actively dispose of heat from the auxiliary heat exchanger 42 into the environment.

However, instead of using an active refrigeration cycle, the auxiliary heat exchanger 42 may also be cooled by water. This is particularly useful in subsea applications.

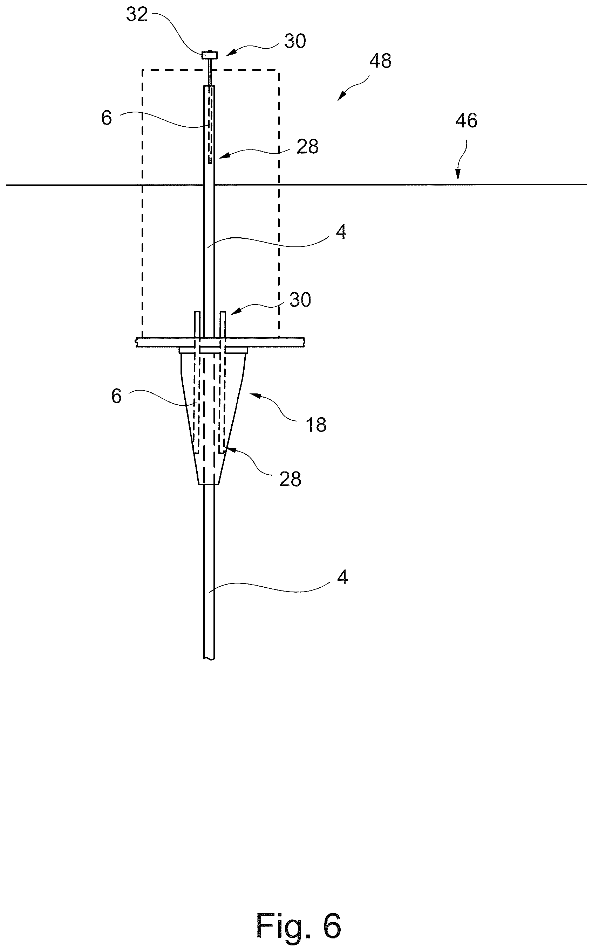

Fig. 6 schematically shows a floating structure 48. A bend stiffener 18 is exemplarily below the water level 46. Cooling devices 6 are exemplarily arranged in the bend stiffener 18. A first region 28 of the respective cooling device 6 is arranged inside the bend stiffener 18 and a second region 30 axially protrudes above the bend stiffener 18. Hence, heat from a power cable 4 inside the bend stiffener 18 is transferred to a location above the bend stiffener 18. Above the water level 46, exemplarily a cooling device 6 is shown integrated into the power cable 4. Exemplarily, a first region 28 of the cooling device 6 is inside the power cable 4. The cooling device 6 extends beyond a termination device (not shown), and comprises, in a second region 30, cooling fins 32 to dissipate heat into the ambient air.

### Reference numerals

- 2: power cable system
- 4: power cable
- 6: cooling device
- 8: conductor
- 10: conductor screen
- 12: insulating layer
- 14: enclosure
- 16: filler element
- 18: bend stiffener
- 20: first end
- 22: second end
- 24: central opening
- 26: ground
- 28: first region
- 30: second region
- 32: fins
- 34: pipe
- 36: cooling device
- 38: first region
- 40: second region
- 42: auxiliary heat exchanger
- 44: refrigeration apparatus
- 46: water level
- 48: floating structure

## Claims

1. Power cable system (2), comprising
a power cable (4), and
a cooling device (6) thermally coupled to the power cable (4),
wherein the cooling device (6) comprises an enclosure (14),
wherein a first region (28) of the enclosure (14) is configured to absorb heat from one part the power cable (4),
wherein a second region (30) of the enclosure (14) is configured to release heat to another part of the power cable (4), another component or an external environment,
wherein the cooling device (6) has a two-phase heat transfer mechanism inside the enclosure (14) for conducting a heat transfer between the first region (28) and the second region (30),
wherein the enclosure (14) is elongated and hermetically sealed, and wherein at least a part of the cooling device (6) is integrated into the power cable (4) or into a bend stiffener (18).

2. The power cable system (2) according to claim 1,
wherein the cooling device (6) is integrated into a filler element (16) of the power cable (4).

3. The power cable system (2) according to claim 1 or 2,
wherein the cooling device (6) has a spiral shape.

4. The power cable system (2) according to any of the preceding claims,
wherein the cooling device (6) is integrated into a conductor (8) of the power cable (4).

5. The power cable system (2) according to any of the preceding claims,
comprising heat exchange fins (32), baffles, or other heat transferring structural elements arranged on the second region (30).

6. The power cable system (2) according to any of the preceding claims,
comprising an auxiliary heat exchanger (42) arranged in, at or near the second region (30),
wherein the auxiliary heat exchanger (42) is configured to remove heat from the cooling device (6).

7. The power cable system (2) according to claim 6,
wherein the auxiliary heat exchanger (42) is coupled with a refrigeration apparatus (44).

8. The power cable system (2) according to any of the preceding claims,
wherein the cooling device (6) comprises a heat pipe or a thermosiphon.

9. Method for cooling a power cable (4), the method comprising:
absorbing heat from one part of the power cable (4) through a first region (28) of a cooling device (6) being thermally coupled to the power cable (4), wherein the cooling device (6) comprises an elongated and hermetically sealed enclosure (14) in which a two-phase heat transfer mechanism is included, and
conducting the heat to another part of the power cable (4) or another object or the environment through a second region (30) of the cooling device (6),
wherein the cooling device (6) is integrated into the power cable (4) or into a bend stiffener (18).

10. The method according to claim 9,
wherein the cooling device (6) is a heat pipe or a thermosiphon.

11. The use of a two-phase heat transfer mechanism in an elongated and hermetically sealed enclosure of a cooling device (6) in thermal contact with a power cable (4) of a power cable system (2) to cool the power cable (4), wherein at least a part of the cooling device (6) is integrated into the power cable (4) or into a bend stiffener.
